# EUROPEAN PATENT SPECIFICATION

(11) **EP 2 305 765 B1**
(45) Date of publication and mention of the grant of the patent: **30.04.2014**
(21) Application number: 10013284.4
(22) Date of filing: 04.10.2010
(51) Int. Cl.: C09J 183/04

(54) **Addition curable self-adhesive silicone rubber composition**
Mit Zusätzen härtbare selbsthaftende Silikonkautschukzusammensetzung
Composition d'addition de caoutchouc de silicone durcissable auto-adhésif

(30) Priority: 05.10.2009 JP 2009231365
(43) Date of publication of application: 06.04.2011
(73) Proprietor: Shin-Etsu Chemical Co., Ltd., Tokyo (JP)
(72) Inventor: Meguriya, Noriyuki, Annaka-shi Gunma-ken (JP); Yamazaki, Toshio, Annaka-shi Gunma-ken (JP)
(74) Representative: Merkle, Gebhard

(56) References cited:
- EP-A2- 1 172 414
- US-A- 5 312 690
- US-A1- 2007 218 299

## Description

### TECHNICAL FIELD

This invention relates to a method for producing an integrally molded article using an addition curable silicone rubber composition having a self-adhesion ability and more particularly, an addition curable self-adhesive silicone rubber composition which may cure and bond to organic resins such as polyamide, polybutylene terephthalate (PBT), polycarbonate, polyphenylene oxide and polyphenylene sulfide, metals such as iron and aluminum, and various glass materials.

### BACKGROUND ART

Since silicone rubber has excellent characteristics including heat resistance, freeze resistance, safety, electric insulation and weather resistance, it finds widespread use in a variety of fields, for example, as automotive parts such as connector seals and spark plug boots, electric/electronic parts such as copier rolls and microwave oven gaskets, and building parts such as sealants, as well as many consumer parts such as nursing nipples and diving gears. In many of these applications, silicone rubber is used as articles combined with metals and organic resins. Many methods were proposed for manufacturing cured products of addition curable silicone rubber integrated with metals and organic resins. Such integrally bonded articles are typically produced by (i) coating the surface of a molded resin with a primer, applying an uncured silicone rubber composition thereto, and curing, (ii) coating an adhesive to an interface, (iii) two-color molding so as to provide mutual engagement, and (iv) curing a self-adhesive silicone rubber composition to a molded resin. However, the use of adhesives or primers leads to an increased number of steps, and with a certain coating technique, the surface to be bonded may be smeared. The two-color molding method can imposes limitation on the shape of integrated articles and lead to insufficient interfacial adhesion. One solution is a self-adhesive type silicone rubber composition obtained by adding an adhesive to a silicone rubber composition. The self-adhesive type silicone rubber composition eliminates the priming step, shortens the operating time, reduces the cost, and improves the efficiency of operation. It constitutes an effective means for manufacturing integrally molded articles with resins.

In connection with the primerless molding of addition type heat-curable silicone rubber compositions, a number of reports have been made for bonding silicone rubber to organic resins. In one exemplary attempt, self-adhesive silicone rubber compositions are cured on resins. Many proposals were made relating to specific adhesive components for use in the self-adhesive silicone rubber compositions. Also, JP-B H02-34311 discloses to add an organopolysiloxane containing at least 30 mol% of hydrogen atoms directly bonded to silicon atoms to an organic resin so that the resin may become bondable to an addition reaction curable silicone rubber. JP-B S63-4529 discloses the integration of silicone rubber to organic resin by physical engagement. JP-A S63-183843 discloses the integral adhesion of silicone rubber to an olefin resin having grafted thereto a compound having an aliphatic unsaturated group and a silicon-bonded hydrolyzable group. JP-A H09-165516 and JP-A H09-165517 propose a process in which a thermoplastic resin having added thereto a compound having an aliphatic unsaturated group and a hydrogen atom directly bonded to silicon atom is adhesively joined and integrated with silicone rubber as well as an integrally molded article in which a resin having blended therein a thermoplastic oligomer containing aliphatic unsaturated groups is integrally molded with an oil-bleeding silicone rubber.

The document US 5 312 690 A discloses an addition curable self-adhesive silicone rubber composition comprising
(A) 100 parts by weight of an organopolysiloxane containing at least two silicon-bonded alkenyl groups in a molecule,
(B) 2 parts by weight of an organohydrogenpolysiloxane containing at least two silicon-bonded hydrogen atoms in a molecule, but free of a silicon-bonded aromatic ring,
(D) 20 100 parts by weight of a reinforcing silica fine powder,
(E) 3 parts by weight and is an organic compound containing at least one isocyanate group in a molecule selected from alternatives as in present claim 1 (3-isocyanatepropyltrimethoxysilane) as adhesive aid,
(F) a catalytic amount of an addition reaction catalyst.

Moreover this composition is molded on a metal surface (iron).

However, heat-curable silicone rubber compositions of the addition reaction type fail to achieve through a brief molding step a sufficient bond to general thermoplastic resins including ABS, PPO, PPS, PC, PE, PP, PBT, PET, acrylic resins, PA, aromatic PA, and urethane. To acquire a bonding ability, the resins must be modified as suggested in the above patents. Modification of resins requires additional steps and an extra cost, and the modified resins sometimes become vulnerable to quality alteration.

### Citation List

Patent Document 1: JP-B H02-34311
Patent Document 2: JP-B S63-4529
Patent Document 4: JP-A S63-183843
Patent Document 5: JP-A H09-165516
Patent Document 6: JP-A H09-165517
Patent Document 7: JP-A H08-53661

### DISCLOSURE OF INVENTION

An object of the invention is to provide a method for producing integrally molded articles for use in automotive parts, communication equipment parts and electric/electronic parts by integrally molding silicone rubber compositions with metals or thermoplastic resins.

The inventors have found that when a specific crosslinker and a specific adhesion promoter are added to an addition curable silicone rubber composition, the resulting composition becomes bondable with a wide variety of materials including metals such as iron, aluminum, copper and stainless steel, and resins such as polycarbonate, polyamide, aromatic polyamide, polybutylene terephthalate (PBT), polyethylene terephthalate (PET), polyphenylene sulfide (PPS), polyphenylene oxide (PPO), polyimide, and polyurethane, and that the cured silicone rubber has relatively low compression set.

The invention provides a method as defined in claim 1 that employs an addition curable self-adhesive silicone rubber composition comprising
(A) 100 parts by weight of an organopolysiloxane containing at least two silicon-bonded alkenyl groups in a molecule,
(B) 0.1 to 30 parts by weight of an organohydrogenpolysiloxane containing at least two silicon-bonded hydrogen atoms in a molecule, but free of a silicon-bonded aromatic ring,
(C) 0.1 to 30 parts by weight of an organosilicon compound containing at least one SiH group and at least one mono- to tetravalent aromatic ring in a molecule,
(D) 0 to 100 parts by weight of a reinforcing silica fine powder,
(E) 0.1 to 25 parts by weight of an organosilicon compound as defined in claim 1 and
(F) a catalytic amount of an addition reaction catalyst.

In a preferred embodiment, the organosilicon compound (C) is an organopolysiloxane containing at least three silicon-bonded hydrogen atoms in a molecule wherein at least 2 mol% of the total of silicon-bonded hydrogen atoms and silicon-bonded organic groups are phenyl groups, said organopolysiloxane having a degree of polymerization of 15 to 100. In another preferred embodiment, the organosilicon compound (C) is an organosilicon compound of 3 to 50 silicon atoms containing at least three SiH groups and at least one di- to tetravalent phenylene skeleton in a molecule.

In a preferred embodiment, the silicone rubber composition has a viscosity in the range of 50 to 800 Pa-s at 25°C and a shear rate of 10 s⁻¹ and is used in injection molding.

In a preferred embodiment, the silicone rubber composition has a 10% cure time T10 of 10 seconds to 60 seconds when measured at 130°C for 3 minutes and is used in injection molding.

### ADVANTAGEOUS EFFECTS OF INVENTION

The addition curable self-adhesive silicone rubber composition is effectively bondable with a wide variety of metals and organic resins.

### DESCRIPTION OF EMBODIMENTS

Component (A) which is a base polymer in the composition is an organopolysiloxane containing at least two silicon-bonded alkenyl groups in a molecule. The organopolysiloxane typically has the average compositional formula (I).

R¹ₐSiO_{(4-a)/2} (I)

Herein R¹ is each independently a substituted or unsubstituted monovalent hydrocarbon group of 1 to 10 carbon atoms, preferably 1 to 8 carbon atoms, and "a" is a positive number in the range of 1.5 to 2.8, preferably 1.8 to 2.5, and more preferably 1.95 to 2.05.

Examples of the optionally substituted monovalent C₁-C₁₀ hydrocarbon groups, represented by R¹, include alkyl groups such as methyl, ethyl, propyl, isopropyl, butyl, isobutyl, tert-butyl, pentyl, neopentyl, hexyl, cyclohexyl, octyl, nonyl and decyl; aryl groups such as phenyl, tolyl, xylyl and naphthyl; aralkyl groups such as benzyl, phenylethyl and phenylpropyl; alkenyl groups such as vinyl, allyl, propenyl, isopropenyl, butenyl, hexenyl, cyclohexenyl and octenyl; and substituted forms of the foregoing groups in which some or all hydrogen atoms are replaced by halogen atoms (e.g., fluoro, bromo and chloro), cyano groups or the like, such as chloromethyl, chloropropyl, bromoethyl, trifluoropropyl and cyanoethyl. It is preferred that at least 90 mol% of entire R¹ be methyl, and most preferably, all R¹ excluding alkenyl groups be methyl.

At least two of the R¹ groups must be alkenyl groups, preferably of 2 to 8 carbon atoms, more preferably 2 to 6 carbon atoms, and most preferably vinyl. It is noted that the content of alkenyl groups is preferably 1.0×10⁻⁶ mol/g to 5.0×10⁻⁴ mol/g, and more preferably 1.0×10⁻⁵ mol/g to 2.0×10⁻⁴ mol/g of the organopolysiloxane. If the alkenyl content is less than 1.0×10⁻⁶ mol/g, then the rubber may become gel-like due to a too low hardness. If the alkenyl content is more than 5.0×10⁻⁴ mol/g, then the rubber may have a high hardness due to an extremely high crosslinking density. The alkenyl groups may be attached to silicon atoms at ends of the molecular chain and/or silicon atoms midway the molecular chain.

With respect to the structure, the organopolysiloxane generally has a straight chain structure whose backbone is composed of recurring diorganosiloxane units and which is blocked with a triorganosiloxy group at either end of the molecular chain. However, it may have in part a branched or cyclic structure. With respect to the molecular weight, the organopolysiloxane used herein has an average degree of polymerization of up to 1,500, specifically 100 to 1,500, and preferably 150 to 1,000. With an average degree of polymerization of less than 100, no satisfactory rubber feel may be obtainable. With an average degree of polymerization of more than 1,500, the rubber has too high a viscosity to mold. The average degree of polymerization as used herein refers to a weight average degree of polymerization and is generally determined by gel permeation chromatography (GPC) versus polystyrene standards.

Component (B) is an organohydrogenpolysiloxane containing at least two, preferably at least three silicon-bonded hydrogen atoms (i.e., SiH or hydrosilyl groups) in a molecule, but free of a silicon-bonded aromatic ring such as phenyl group. It serves as a curing or crosslinking agent for curing the composition in a way wherein SiH groups in the molecule form crosslinks with silicon-bonded alkenyl groups in component (A) through addition reaction or hydrosilylation. Component (B) is a polysiloxane compound in which each silicon atom in a molecule is linked through oxygen atom to form Si-O-Si bond or siloxane structure. Other than oxygen atoms, an atom or organic group directly bonded to a silicon atom is monovalent. Other than oxygen atoms, any divalent group or polyvalent group such as a divalent or polyvalent aromatic ring is not contained in a molecule of the organohydrogenpolysiloxane of component (B).

Typical is an organohydrogenpolysiloxane which is represented by the following average compositional formula (II):

R²_{c}H_{d}SiO_{(4-c-d)/2} (II)

wherein R² is a substituted or unsubstituted monovalent hydrocarbon group of 1 to 10 carbon atoms, c is a positive number of 0.7 to 2.1, d is a positive number of 0.001 to 1.0, and c+d is 0.8 to 3.0, and which has at least two (specifically 2 to 200), preferably at least three (specifically 3 to 200), more preferably 5 to 100, and even more preferably 8 to 50 silicon-bonded hydrogen atoms (Si-H groups) in a molecule.

Examples of the optionally substituted monovalent C₁-C₁₀ hydrocarbon group of R² are as exemplified for R¹, but exclude aromatic rings such as aryl groups including phenyl group and aralkyl groups. Also preferably the groups of R² are free of aliphatic unsaturation such as alkenyl groups. Specifically substituted or unsubstituted alkyl groups such as methyl and trifluoropropyl are preferred. The subscript c is a positive number of 0.7 to 2.1, preferably 0.8 to 2.0, d is a positive number of 0.001 to 1.0, preferably 0.01 to 1.0, and c+d is 0.8 to 3.0, preferably 1.0 to 2.5. The molecular structure of organohydrogenpolysiloxane may be straight, cyclic, branched or three-dimensional network. Desirable are those which are liquid at room temperature (25°C) and have a number of silicon atoms per molecule or a degree of polymerization in the range of 2 to 300, preferably 3 to 200, more preferably 10 to 200, and even more preferably 15 to 100. The hydrogen atoms may be attached to silicon atoms at ends of the molecular chain and/or silicon atoms midway the molecular chain (i.e., non-terminal positions of the molecular chain).

Exemplary organohydrogenpolysiloxanes include, but are not limited to, 1,1,3,3-tetramethyldisiloxane, 1,3,5,7-tetramethylcyclotetrasiloxane, methylhydrogencyclopolysiloxane, methylhydrogencyclosiloxane-dimethylsiloxane cyclic copolymers, tris(dimethylhydrogensiloxy)methylsilane, trimethylsiloxy-endcapped methylhydrogenpolysiloxane, trimethylsiloxy-endcapped dimethylsiloxane-methylhydrogensiloxane copolymers, dimethylhydrogensiloxy-endcapped dimethylpolysiloxane, dimethylhydrogensiloxy-endcapped dimethylsiloxane-methylhydrogensiloxane copolymers, copolymers of (CH₃) ₂HSiO_{1/2} and SiO_{4/2} units, copolymers of (CH₃) ₃SiO_{1/2}, (CH₃) ₂HSiO_{1/2}, and SiO_{4/2} units, copolymers of (CH3) ₂HSiO_{1/2}, SiO_{4/2} , and (CH₃) SiO_{3/2} units, and copolymers of (CH₃) ₂HSiO_{1/2}, SiO_{4/2}, and (CH₃) ₂SiO_{2/2} units. As used herein and throughout the disclosure, the term "endcapped" means that a compound is capped at both ends with the indicated group unless otherwise stated.

The organohydrogenpolysiloxane should preferably have a content of silicon-bonded hydrogen (SiH groups) of 0.003 to 0.015 mol/g, more preferably 0.005 to 0.013 mol/g. A SiH content of less than 0.003 mol/g may lead to insufficient crosslinking.

The organohydrogenpolysiloxane (B) is blended in an amount of 0.1 to 30 parts, preferably 0.3 to 15 parts by weight per 100 parts by weight of the organopolysiloxane (A). Less than 0.1 pbw of component (B) may lead to insufficient crosslinking so that the rubber may become rather sticky. More than 30 pbw of component (B) may detract from rubber physical properties and be uneconomical.

Component (C) is an organosilicon compound containing at least one SiH group and at least one mono- to tetravalent aromatic ring (e.g., at an end and/or side chain) in a molecule. This component is essential for the composition to develop adhesion.

Any compounds satisfying the foregoing conditions may be used. Preferred is a phenyl-containing organohydrogenpolysiloxane containing at least three silicon-bonded hydrogen atoms (SiH groups) in the molecule wherein at least 2 mol% of the total of silicon-bonded hydrogen atoms and all silicon-bonded organic groups are phenyl groups.

Typical is a phenyl-containing organohydrogenpolysiloxane which has the following average compositional formula (III):

R³_{c}H_{d}SiO_{(4-c-d)/2} (III)

wherein R³ is a substituted or unsubstituted monovalent hydrocarbon group of 1 to 10 carbon atoms, c is a positive number of 0.7 to 2.1, d is a positive number of 0.001 to 1.0, and c+d is 0.8 to 3.0, and which has at least three, preferably 4 to 100, and more preferably 6 to 50 silicon-bonded hydrogen atoms (SiH groups) in a molecule.

Examples of the optionally substituted monovalent C₁-C₁₀ hydrocarbon group of R³ are as exemplified for R¹. It is essential that at least 2 mol%, preferably at least 3 mol%, and more preferably at least 5 mol% of the total of silicon-bonded hydrogen atoms and all silicon-bonded organic groups (R³) be phenyl groups. Also preferably the groups of R³ are free of aliphatic unsaturation.

The subscript c is a positive number of 0.7 to 2.1, preferably 0.8 to 2.0, d is a positive number of 0.001 to 1.0, preferably 0.01 to 1.0, and c+d is 0.8 to 3.0, preferably 1.0 to 2.5. The molecular structure of organohydrogenpolysiloxane may be straight, cyclic, branched or three-dimensional network. Desirable are those which are liquid at room temperature (25°C) and have a number of silicon atoms per molecule or a degree of polymerization in the range of 3 to 300, preferably 10 to 200, and more preferably 15 to 100. The hydrogen atoms may be attached to silicon atoms at ends of the molecular chain and/or silicon atoms midway the molecular chain.

Exemplary phenyl-containing organohydrogenpolysiloxanes include, but are not limited to, trimethylsiloxy-endcapped methylhydrogensiloxane-diphenylsiloxane copolymers, trimethylsiloxy-endcapped methylhydrogensiloxane-methylphenylsiloxane copolymers, trimethylsiloxy-endcapped dimethylsiloxane-methylhydrogensiloxane-diphenylsiloxane copolymers, trimethylsiloxy-endcapped dimethylsiloxane-methylhydrogensiloxane-methylphenylsiloxane copolymers, dimethylhydrogensiloxy-endcapped dimethylsiloxane-diphenylsiloxane copolymers, dimethylhydrogensiloxy-endcapped dimethylsiloxane-methylphenylsiloxane copolymers, dimethylhydrogensiloxy-endcapped dimethylsiloxane-methylhydrogensiloxane-diphenylsiloxane copolymers, dimethylhydrogensiloxy-endcapped dimethylsiloxane-methylhydrogensiloxane-methylphenylsiloxane copolymers, copolymers of (CH3) ₂HSiO_{1/2}, SiO_{4/2} and (C₆H₅) SiO_{3/2} units, copolymers of (CH₃) ₂HSiO_{1/2}, SiO_{4/2} and (C₆H₅) ₂SiO_{2/2} units, copolymers of (CH₃) ₂HSiO_{1/2}, SiO_{4/2} and (C₆H₅) ₃SiO_{1/2} units, copolymers of (CH₃) ₃SiO_{1/2}, (CH₃) ₂HSiO_{1/2}, SiO_{4/2} and (C₆H₅) SiO_{3/2} units, copolymers of (CH₃) 3SiO_{1/2}, (CH₃) ₂HSiO_{1/2}, SiO_{4/2} and (C₆H₅) ₂SiO_{2/2} units, and copolymers of (CH₃) ₃SiO_{1/2}, (CH₃) ₂HSiO_{1/2}, SiO_{4/2} and (C₆H₅) ₃SiO_{1/2} units.

The phenyl-containing organohydrogenpolysiloxane should preferably have a content of silicon-bonded hydrogen (SiH groups) of 0.006 to 0.015 mol/g, more preferably 0.007 to 0.013 mol/g. A SiH content of less than 0.006 mol/g may lead to insufficient adhesion.

The organosilicon compound containing at least one SiH group and at least one mono- to tetravalent aromatic ring in a molecule as component (C) is preferably an organosilicon compound containing at least three SiH groups and at least one di- to tetravalent phenylene skeleton in a molecule.

More particularly, the SiH and phenylene skeleton-containing organosilicon compounds include organosilicon compounds of 3 to 100, preferably 3 to 50, and more preferably 4 to 30 silicon atoms, typically straight or cyclic organosiloxane oligomers and organoalkoxysilanes, which have at least three, specifically 3 to 20, more specifically 4 to 10 SiH groups (i.e., silicon-bonded hydrogen atoms) per molecule, at least one, specifically 1 to 20, more specifically 2 to 10 di- to tetravalent phenylene skeletons, and optionally, one or more functional groups, for example, epoxy (e.g., glycidoxy), alkoxysilyl (e.g., trimethoxysilyl, triethoxysilyl, and methyldimethoxysilyl), ester, acrylic, methacrylic, carboxylic anhydride, isocyanate, amino, and amide groups.

Examples of the SiH and phenylene skeleton-containing organosilicon compounds are given below. 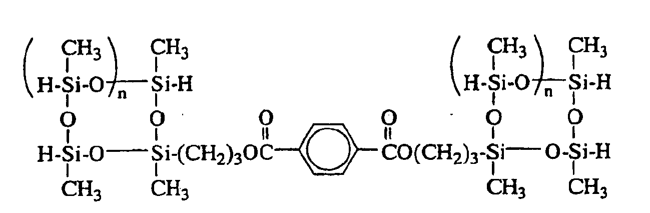 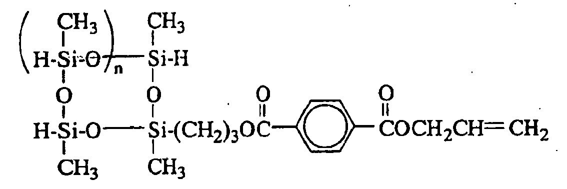 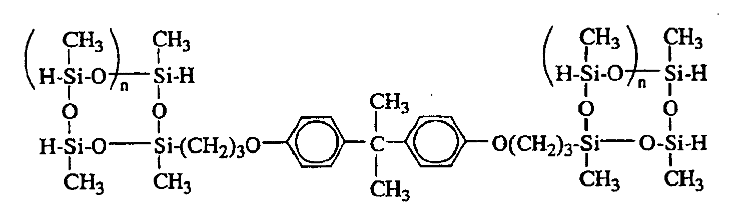 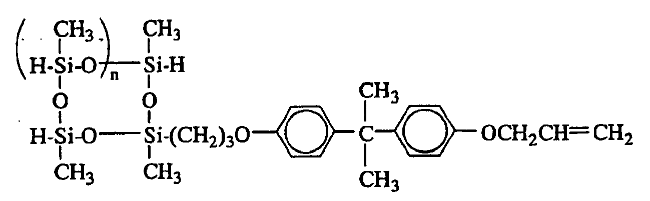 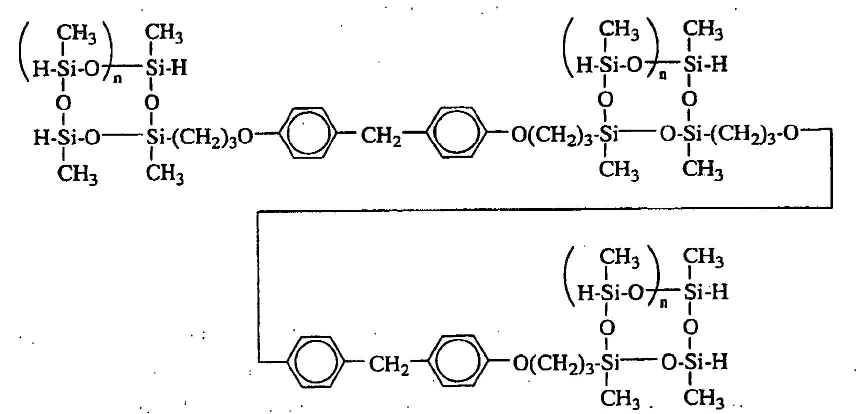 Herein n is an integer of 1 to 4. 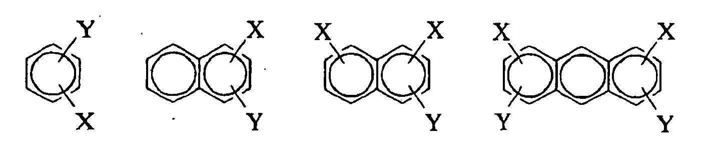 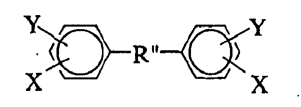 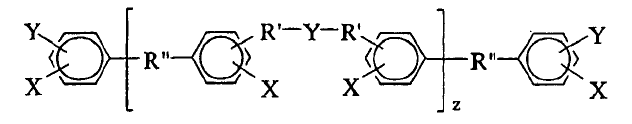 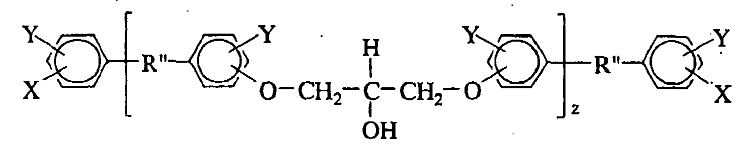 In the above formulae, X is 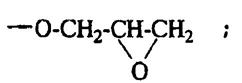 Y is 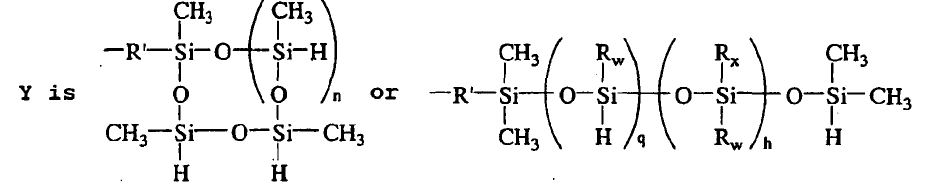 wherein n is an integer of 1 to 4, Rw and Rx are substituted or unsubstituted monovalent hydrocarbon groups, q is an integer of 1 to 50, preferably 1 to 20, and h is an integer of 0 to 100, preferably 1 to 50;
R' is a group selected from the following:
R' : -O-CH₂CH₂CH₂ -CH₂CH₂CH₂- -OCH₂CH₂CH₂O- 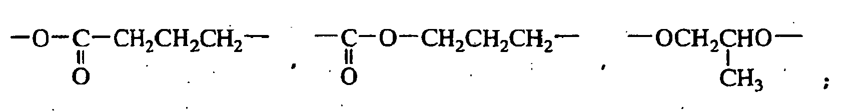
R" is a group selected from the following:
   -O- - CH₂ 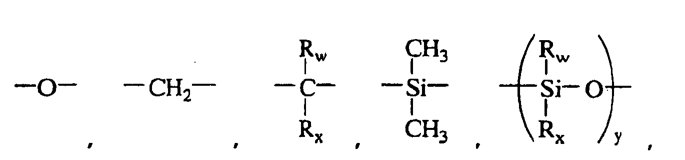 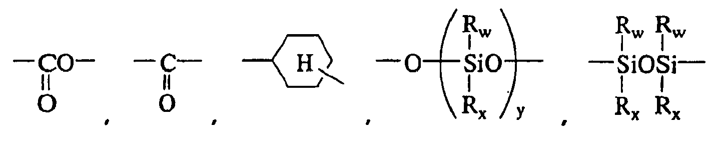 wherein Rw and Rx are as defined above, and y is an integer of 0 to 100;
Y' is 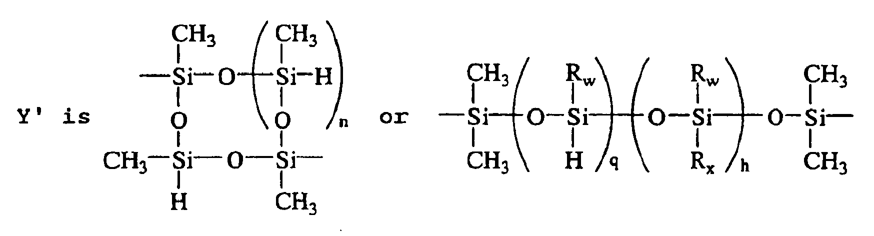 wherein n is an integer of 1 to 4, Rw, Rx, q and h are as defined above; and
z is an integer of 1 to 10.

Modified forms of the foregoing compounds into which are incorporated alkoxysilyl (e.g., trimethoxysilyl, triethoxysilyl, and methyldimethoxysilyl), acrylic, methacrylic, ester, carboxylic anhydride, isocyanate, amino, and amide groups constitute a class of other suitable organic compounds or organosilicon compounds used herein.

The optionally substituted monovalent hydrocarbon groups of Rw and Rx are preferably of 1 to 12 carbon atoms, more preferably 1 to 8 carbon atoms, and include alkyl, aryl, aralkyl and alkenyl groups as exemplified for R¹. Suitable substituted monovalent hydrocarbon groups include those substituted with alkoxy, acrylic, methacrylic, acryloyl, methacryloyl, amino and alkylamino groups.

Component (C) is blended in an amount of 0.1 to 30 parts, preferably 0.2 to 20 parts, and more preferably 0.3 to 15 parts by weight per 100 parts by weight of the organopolysiloxane (A). Less than 0.1 pbw of component (C) may fail to provide sufficient adhesion whereas more than 30 pbw of component (C) may detract from physical properties.

Preferably the total amount of silicon-bonded hydrogen atoms (SiH groups) in components (B) and (C) is preferably controlled relative to the amount of alkenyl groups in component (A) such that a ratio of SiH groups to alkenyl groups (mol/mol) may range from 1.0 to 5.0, and more preferably from 1.2 to 3.0.

The reinforcing silica fine powder (D) may be any of silica species commonly used in the art as a reinforcement for rubber. Although any silica fine powders used in conventional silicone rubber compositions are useful, a reinforcing silica fine powder having a specific surface area of at least 50 m²/g is preferred. It is advantageous to use precipitated silica (wet silica), fumed silica (dry silica) and fired silica having a specific surface area of 50 to 400 m²/g, with the fumed silica being especially advantageous for improved rubber strength. The reinforcing silica fine powder may be surface treated. In this case, silica particles may be directly treated.

Any of well-known techniques may be used for the surface treatment. For example, an untreated silica fine powder and a surface treating agent are admitted into a mechanical milling device closed under atmospheric pressure or a fluidized bed where they are mixed to effect surface treatment at room temperature or elevated temperature, optionally in the presence of an inert gas. If desired, a catalyst is used to promote the surface treatment. After thorough admixing, the powder is dried, yielding a treated silica fine powder. The amount of the surface treating agent used is at least the theoretical amount calculated from the surface area to be covered with the agent. Suitable treating agents include silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane and chloropropyltrimethoxysilane; and organosilicon compounds such as polymethylsiloxane and organohydrogenpolysiloxane. After surface treatment with such treating agents, the resulting hydrophobic silica fine particles are ready for use. Of these treating agents, the silane coupling agents and silazanes are preferred.

An appropriate amount of component (D) blended is 0 to 100 parts, preferably 5 to 80 parts, and more preferably 10 to 50 parts by weight per 100 parts by weight of the organopolysiloxane (A). It is acceptable herein to omit component (D), although there may sometimes arise problems such as weak mechanical strength of cured rubber and inconvenience of molding, typically mold release. More than 100 pbw of component (D) is difficult to fill, aggravating working and processing efficiency.

Component (E) is an isocyanate-containing organosilicon compound as defined in claim 1, typically organosiloxanes containing 1 to 4, especially 1 or 2 isocyanate groups in a molecule, for example, disiloxane compounds and cyclic tetrasiloxane compounds as shown below.

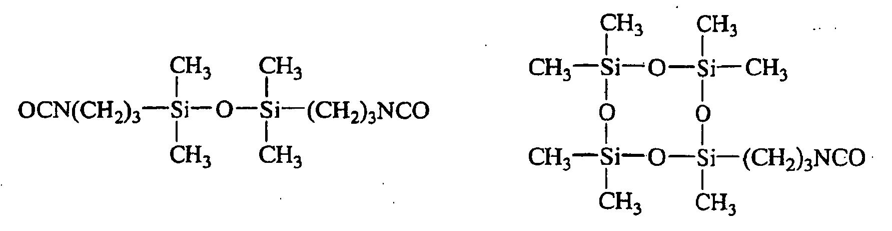

More preferred are organosilicon compounds containing an isocyanate group and a hydrolyzable group, typically organosilane compounds containing in a molecule an alkoxysilyl group (typically trialkoxysilyl) such as methoxysilyl or ethoxysilyl (typically trimethoxysilyl or triethoxysilyl) and/or a silanol group in addition to an isocyanate group, and partial hydrolytic condensates thereof (i.e., siloxane compounds). Examples of the organosilicon compounds containing an isocyanate group and a hydrolyzable group include organosilanes containing an isocyanate group and a trialkoxysilyl group, such as

(CH₃O)₃-Si-(CH₂)₃NCO

nd

( CH₃CH₂O)₃-Si-(CH₂)₃NCO

and partial hydrolyzates thereof.

An appropriate amount of component (E) blended is 0.1 to 25 parts, preferably 0.2 to 15 parts, and more preferably 0.2 to 5 parts by weight per 100 parts by weight of the organopolysiloxane (A). Less than 0.1 pbw of component (E) may fail to develop adhesion whereas more than 25 pbw may detract from rubber physical properties.

Component (F) is an addition reaction catalyst. Examples include platinum base catalysts such as platinum black, platinic chloride, reaction products of chloroplatinic acid with monohydric alcohols, complexes of chloroplatinic acid with olefins, and platinum bisacetoacetate, palladium catalysts and rhodium catalysts. The catalyst may be added in a catalytic amount, specifically 0.1 to 1,000 ppm, more specifically 1 to 200 ppm of platinum, palladium or rhodium metal based on the weight of the organopolysiloxane (A).

In addition to the above-described components, various additives may be added to the addition curable self-adhesive silicone rubber composition of the invention. Such additives are selected for a particular purpose. Typical additives are metal oxides and compounds thereof such as titanium oxide, iron oxide, cerium oxide, vanadium oxide, cobalt oxide, chromium oxide, and manganese oxide, and inorganic fillers, for example, quartz powder, diatomaceous earth, calcium carbonate, magnesium carbonate, alumina, and carbon, hollow glass, hollow resins, conductive inorganic powders of gold, silver and copper, and metallized particle powder. Also, pigments, heat resistance modifiers, flame retardants, plasticizers, and reaction regulators may be added insofar as the desired properties are not impaired. These optional additives may be added in conventional amounts that would not hamper the benefits of the invention.

The silicone rubber composition can be obtained simply by uniformly admixing the above-described components (A) to (F) and optional components at room temperature. In one preferred procedure, component (D) is mixed with all or a portion of component (A) in a planetary mixer or kneader where they are heat treated at a temperature of 100 to 200°C for 1 to 4 hours. The mixture is cooled to room temperature, whereupon the remaining components are added and mixed.

Any desired molding technique may be selected depending on the viscosity of the mixture or composition. Any of casting, compression molding, dispenser molding, injection molding, extrusion molding, and transfer molding techniques is useful. The composition may be heat molded, typically at a temperature of 60 to 200°C for 10 seconds to 24 hours.

In molding the addition curable self-adhesive silicone rubber composition, a method capable of taking advantage of its adhesion is preferably used. Preferred is an insert molding method including mounting a member in a mold, placing an uncured composition in contact with the member, and curing the composition to form an integrally molded article. Also preferred is a two-color molding method including alternately injecting a molten or uncured organic resin and the composition into a mold to form an integrally molded article.

In order that the composition be effective in these molding methods, the composition should preferably have a viscosity at 25°C in the range of 50 to 800 Pa-s, more preferably 80 to 600 Pa-s, and even more preferably 100 to 500 Pa-s at a shear rate of 10 s⁻¹. If the viscosity is less than 50 Pa-s or more than 800 Pa-s, molding may become difficult. The cure speed of the composition is not particularly limited as long as the aforementioned molding methods can be implemented. With a focus on molding efficiency, the composition should preferably meet 10 seconds ≤ T10 ≤ 60 seconds, more preferably 15 seconds ≤ T10 ≤ 40 seconds, provided that T10 is a 10% cure time (in sec) when measured at 130°C for 3 minutes on a cure tester (e.g., rotorless disc rheometer or moving die rheometer (MDR)). If T10 is less than 10 seconds, the composition cures too fast to mold. A T10 in excess of 60 seconds indicates a prolonged molding cycle which is uneconomical.

The addition curable self-adhesive silicone rubber composition may find use in many fields as integral articles of silicone rubber integrated with metals or organic resins, for example, parts in precision electronic equipment such as mobile phones, mobile communications equipment, mobile computers, entertainment machines, watches, image receivers, DVD equipment, MD equipment and CD equipment, electric appliances such as microwave ovens, refrigerators, rice cookers, cathode-ray tube displays, and flat panel displays (e.g., LC and plasma displays), business machines such as copiers, printers and facsimile machines, and automotive parts such as connector seals, ignition plug caps, and sensor parts.

Members with which the composition can be integrated are made of metals such as aluminum, iron, copper, zinc, nickel, stainless steel, brass and the like, or organic resins, typically thermoplastic resins such as olefin polymerization or polycondensation systems. Exemplary resins include acrylonitrile-butadiene-styrene (ABS) resins, polycarbonate (PC) resins, urethane (PU) resins, styrene resins, polyethylene resins, polypropylene resins, acrylic resins, polyethylene terephthalate (PET) resins, polybutylene terephthalate (PBT) resins, polyphenylene oxide (PPO) resins, polyphenylene sulfide (PPS) resins, polysulfone resins, nylon resins, aromatic polyamide resins, polyimide resins, and liquid crystal resins.

The composition may be cured under suitable conditions. In order to acquire strong adhesion between the composition and the metal or thermoplastic resin, the composition must be cured at a temperature for a time such that the resin may not be deformed, melted or altered. Integrally molded articles are obtainable under curing conditions including a temperature of 60 to 220°C and a time of 5 seconds to 30 minutes, especially 100 to 200°C and 10 seconds to 10 minutes although the curing conditions vary with the type of resin.

### EXAMPLE

Examples of the invention are given below by way of illustration and not by way of limitation. All parts are by weight.

### Example 1

To 70 parts of a dimethylvinylsiloxy-endcapped dimethylpolysiloxane A having a viscosity of 20,000 mPa-s at 25°C and a degree of polymerization of 620 were added 40 parts of fumed silica having a specific surface area of 200 m²/g and 6 parts of hexamethyldisilazane. The contents were uniformly admixed in a kneader/mixer and further heat admixed at 150°C for 3 hours, obtaining a silicone rubber base. To the silicone rubber base were added 20 parts of dimethylpolysiloxane A, 10 parts of a trimethylsiloxy-endcapped dimethylpolysiloxane B having vinyl groups on side chains (degree of polymerization 180, vinyl value 0.00058 mol/g), 0.44 part of a trimethylsiloxy-endcapped organohydrogenpolysiloxane A in which all silicon-bonded groups other than oxygen and hydrogen atoms are methyl (SiH content 0.0088 mol/g), 1.28 parts of an organohydrogenpolysiloxane B of the following formula (1): 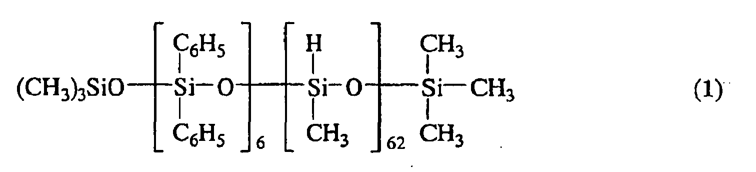 (SiH content 0.0122 mol/g), 0.5 part of an isocyanate-containing organosilicon compound of the following formula (2):

(CH₃O)₃-Si-(CH₂)₃NCO (2)

0.1 part of 1% chloroplatinic acid in 2-ethylhexanol, and 0.05 part of 50% ethynyl cyclohexanol in ethanol as a reaction regulator. The contents were uniformly admixed for about 30 minutes, yielding a silicone rubber composition. This silicone rubber composition had a molar ratio of all SiH functional groups to all alkenyl groups, that is, SiH/alkenyl molar ratio of 2.0.

Using a precision rotational viscometer RotoVisco RV1 (Eko Instruments Co., Ltd.), the viscosity of the silicone rubber composition at 25°C and a shear rate of 10 S⁻¹ was measured to be 195 Pa-s. An ability to cure at 130°C was measured by a moving die rheometer MDR2000 (Alpha Technologies), finding T10 = 25 seconds.

The silicone rubber composition was press-cured at 150°C for 5 minutes and post-cured at 150°C for 2 hours into a cured sample, which was measured for hardness, tensile strength and elongation at break according to JIS K6249. The results are shown in Table 1.

In another test, test pieces (∼25x50 mm) of aluminum, stainless steel (SUS316L), polyethylene terephthalate (PET), nylon 6 (PA), polyphenylene oxide (PPO), and polyphenylene sulfide (PPS) were mounted in molds. The silicone rubber composition was placed thereon and press-cured at 150°C for 3 minutes into a rubber layer of 1 to 3 mm thick. From the integrally molded article, the rubber layer was manually peeled. Adhesion was evaluated in terms of cohesive failure (rubber failure rate). The results are shown in Table 2.

### Example 2

To 60 parts of a dimethylvinylsiloxy-endcapped dimethylpolysiloxane C having a viscosity of 50,000 mPa-s at 25°C and a degree of polymerization of 850 were added 20 parts of fumed silica having a specific surface area of 200 m²/g, 20 parts of precipitated silica having a specific surface area of 200 m²/g, 6 parts of hexamethyldisilazane, and 2 parts of water. The contents were uniformly admixed in a kneader/mixer and further heat admixed at 150°C for 3 hours, obtaining a silicone rubber base. To the silicone rubber base were added 30 parts of dimethylpolysiloxane A (used in Example 1), 10 parts of dimethylpolysiloxane B (used in Example 1), 10 parts of a gum-like trimethylsiloxy-endcapped dimethylpolysiloxane D having vinyl groups on side chains (degree of polymerization 6,000, vinyl value 0.00088 mol/g), 1.62 parts of organohydrogenpolysiloxane A (used in Example 1), 1.48 parts of a phenylene skeleton-bearing organohydrogenpolysiloxane C of the following formula (3): 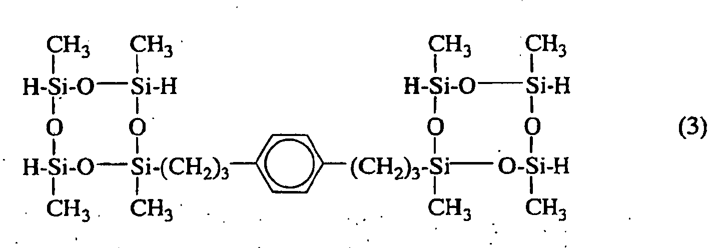 (SiH content 0.0096 mol/g), 1.2 parts of an isocyanate-containing organosilicon compound of the following formula (4):

(CH₃CH₂O)₃-Si -(CH₂)₃NCO (4)

0.1 part of 1% chloroplatinic acid in 2-ethylhexanol, and 0.10 part of 50% ethynyl cyclohexanol in ethanol as a reaction regulator. The contents were uniformly admixed for about 30 minutes, yielding a silicone rubber composition. This silicone rubber composition had a molar ratio of all SiH functional groups to all alkenyl groups, that is, SiH/alkenyl molar ratio of 1.6.

As in Example 1, the silicone rubber composition was determined for viscosity and cure, finding a viscosity of 310 Pa-s and T10 = 36 seconds. It was also measured for hardness, tensile strength, elongation at break, and adhesion as in Example 1. The results are shown in Tables 1 and 2.

### Example 3

To 60 parts of dimethylpolysiloxane C having a degree of polymerization of 850 (used in Example 2) were added 40 parts of fumed silica having a specific surface area of 300 m²/g, 10 parts of hexamethyldisilazane, 0.5 part of divinyltetramethyldisilazane, and 2 parts of water. The contents were uniformly admixed in a kneader/mixer and further heat admixed at 150°C for 3 hours, obtaining a silicone rubber base. To the silicone rubber base were added 20 parts of dimethylpolysiloxane A (used in Example 1), 5 parts of dimethylpolysiloxane B (used in Example 1), 0.24 part of organohydrogenpolysiloxane A having a SiH content of 0.0072 mol/g (used in Example 1), 1.08 parts of an organohydrogenpolysiloxane D of the following formula (5): 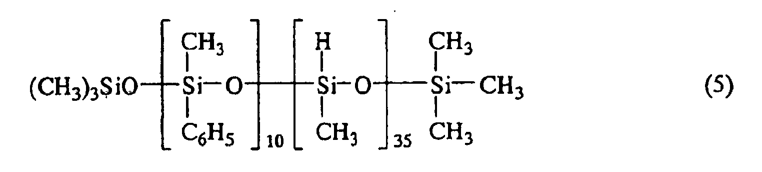 (SiH content 0.0097 mol/g), 0.95 part of a phenylene skeleton-bearing organohydrogenpolysiloxane E of the following formula (6): 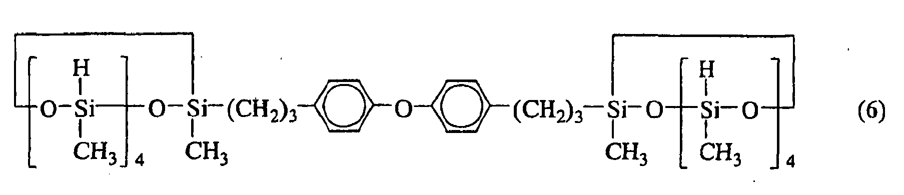 (SiH content 0.0088 mol/g), 1.0 part of an isocyanate-containing organosilicon compound of the following formula (7): 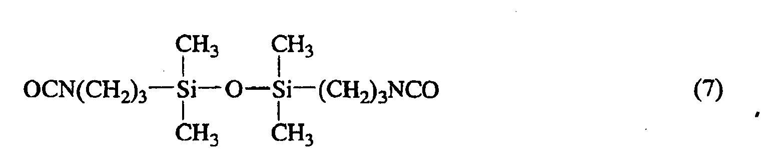 0.1 part of 1% chloroplatinic acid in 2-ethylhexanol, and 0.10 part of 50% ethynyl cyclohexanol in ethanol as a reaction regulator. The contents were uniformly admixed for about 30 minutes, yielding a silicone rubber composition. This silicone rubber composition had a molar ratio of all SiH functional groups to all alkenyl groups, that is, SiH/alkenyl molar ratio of 2.5.

As in Example 1, the silicone rubber composition was determined for viscosity and cure, finding a viscosity of 190 Pa-s and T10 = 33 seconds. It was also measured for hardness, tensile strength, elongation at break and adhesion as in Example 1. The results are shown in Tables 1 and 2.

### Comparative Example 1

A silicone rubber composition was prepared as in Example 1 except that the isocyanate-containing organosilicon compound was omitted. The results are shown in Tables 1 and 2.

### Comparative Example 2

A silicone rubber composition was prepared as in Example 1 except that 1.77 parts of organohydrogenpolysiloxane A was added instead of 1.28 parts of organohydrogenpolysiloxane B so as to give an equal amount of SiH groups. The results are shown in Tables 1 and 2.

### Comparative Example 3

A silicone rubber composition was prepared as in Example 2 except that the isocyanate-containing organosilicon compound was omitted. The results are shown in Tables 1 and 2.

### Comparative Example 4

A silicone rubber composition was prepared as in Example 3 except that the isocyanate-containing organosilicon compound was omitted. The results are shown in Tables 1 and 2.

**Table 1**

| | Example | | | Comparative Example | | | |
|---|---|---|---|---|---|---|---|
| | 1 | 2 | 3 | 1 | 2 | 3 | 4 |
| Hardness, Durometer type A | 36 | 51 | 45 | 37 | 40 | 53 | 45 |
| Tensile strength (MPa) | 8.2 | 9.2 | 8.8 | 8.1 | 8.9 | 9.5 | 8.1 |
| Elongation at break (%) | 690 | 470 | 610 | 650 | 700 | 460 | 580 |

**Table 2**

| | Example | | | Comparative Example | | | |
|---|---|---|---|---|---|---|---|
| | 1 | 2 | 3 | 1 | 2 | 3 | 4 |
| Aluminum | O | O | O | Δ | Δ | Δ | O |
| Stainless steel | O | O | O | ×/Δ | Δ | Δ | Δ |
| PET | O | O | O | Δ | Δ | O | O |
| PA | O | O | O | Δ | × | × | O |
| PPO | O | O | O | × | Δ | Δ | Δ |
| PPS | O | O | O | × | Δ | Δ | Δ |

| | | | | | | | |
|---|---|---|---|---|---|---|---|
| Symbols have the following meaning. O : cohesive failure ≥ 80% Δ : 30% ≤ cohesive failure < 80% ×/Δ : 0% < cohesive failure < 30% × : cohesive failure = 0% (peeled) | | | | | | | |

## Claims

1. A method for producing an integrally molded article which comprises a metal substrate and a cured silicone rubber of an addition curable self-adhesive silicone rubber composition formed on the substrate, the method comprising the steps of:
applying the silicone rubber composition on the metal substrate, and
curing the silicone rubber composition, wherein the silicone rubber composition comprises
(A) 100 parts by weight of an organopolysiloxane containing at least two silicon-bonded alkenyl groups in a molecule,
(B) 0.1 to 30 parts by weight of an organohydrogenpolysiloxane containing at least two silicon-bonded hydrogen atoms in a molecule, but free of a silicon-bonded aromatic ring,
(C) 0.1 to 30 parts by weight of an organosilicon compound containing at least one SiH group and at least one mono- to tetravalent aromatic ring in a molecule,
(D) 0 to 100 parts by weight of a reinforcing silica fine powder,
(E) 0.1 to 25 parts by weight of an organosilicon compound having an isocyanate group which is selected from the group consisting of an organosilane compound having at least one isocyanate group and an alkoxysilyl and/or silanol group in a molecule and an organodisiloxane having two isocyanate groups in a molecule, and
(F) a catalytic amount of an addition reaction catalyst.

2. The method according to claim 1, wherein the metal substrate is selected from the group consisting of aluminum, iron, copper, zinc, nickel, stainless steel, and brass.

3. The method according to claim 1 or 2, wherein the silicone rubber composition is cured at a temperature of 60 to 220°C for 5 seconds to 30 minutes.

4. The method of claim 1 wherein the organosilicon compound (C) is an organopolysiloxane containing at least three silicon-bonded hydrogen atoms in a molecule wherein at least 2 mol% of the total of silicon-bonded hydrogen atoms and silicon-bonded organic groups are phenyl groups, said organopolysiloxane having a degree of polymerization of 15 to 100.

5. The method of claim 1 wherein the organosilicon compound (C) is an organosilicon compound of 3 to 50 silicon atoms containing at least three SiH groups and at least one di- to tetravalent phenylene skeleton in a molecule.

6. The method of any one of claims 1 to 5 wherein the organosilicon compound (E) is selected from the group consisting of 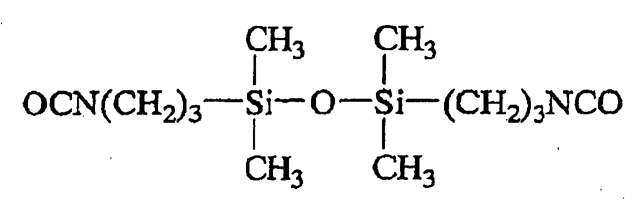
(CH₃O)₃-Si-(CH₂)₃NCO
and
(CH₃CH₂O)₃-Si-(CH₂)₃NCO.

7. The method of any one of claims 1 to 6, wherein the silicone rubber composition has a viscosity in the range of 50 to 800 Pa-s at 25°C and a shear rate of 10 s⁻¹ and is used in injection molding.

8. The method of any one of claims 1 to 7, wherein the silicone rubber composition has a 10% cure time T10 of 10 seconds to 60 seconds when measured at 130°C for 3 minutes and is used in injection molding.

## Patentansprüche

1. Verfahren zur Herstellung eines integralgeformten Körpers, der ein Metallsubstrat und einen auf dem Substrat gebildeten, gehärteten Siliconkautschuk aus einer additionshärtbaren, selbstklebenden Siliconkautschukzusammensetzung umfasst, wobei das Verfahren die Schritte umfasst:
Aufbringen der Siliconkautschukzusammensetzung auf das Metallsubstrat, und
Härten der Siliconkautschukzusammensetzung, wobei die Siliconkautschukzusammensetzung umfasst
(A) 100 Gewichtsteile eines Organopolysiloxans, enthaltend mindestens zwei siliciumgebundene Alkenylgruppen in einem Molekül,
(B) 0,1 bis bis 30 Gewichtsteile eines Organohydrogenpolysiloxans, enthaltend mindestens zwei siliciumgebundene Wasserstoffatome in einem Molekül, das jedoch frei ist von einem siliciumgebundenen aromatischen Ring,
(C) 0,1 bis 30 Gewichtsteile einer Organosiliciumverbindung, enthaltend mindestens eine SiH-Gruppe und mindestens einen mono- bis vierwertigen aromatischen Ring in einem Molekül,
(D) 0 bis 100 Gewichtsteile eines verstärkenden Silica-Feinpulvers,
(E) 0,1 bis 25 Gewichtsteile einer Organosiliciumverbindung mit einer Isocyanatgruppe, welche gewählt ist aus der Gruppe, bestehend aus einer Organosilanverbindung mit mindestens einer Isocyanatgruppe und einer Alkoxysilyl- und/oder Silanolgruppe in einem Molekül und einem Organodisiloxan mit zwei Isocyanatgruppen in einem Molekül, und
(F) eine katalytische Menge eines Additionsreaktionskatalysators.

2. Verfahren nach Anspruch 1, wobei das Metallsubstrat aus der Gruppe gewählt ist, bestehend aus Aluminium, Eisen, Kupfer, Zink, Nickel, nichtrostendem Stahl und Messing.

3. Verfahren nach Anspruch 1 oder 2, wobei die Siliconkautschukzusammensetzung bei einer Temperatur von 60 bis 220°C während 5 Sekunden bis 30 Minuten gehärtet wird.

4. Verfahren nach Anspruch 1, wobei die Organosiliciumverbindung (C) ein Organopolysiloxan ist, enthaltend mindestens drei siliciumgebundene Wasserstoffatome in einem Molekül, wobei mindestens 2 Mol-% der gesamten siliciumgebundenen Wasserstoffatome und silicumgebundenen organischen Gruppen Phenylgruppen sind, wobei das Organopolysiloxan einen Polymerisationsgrad von 15 bis 100 aufweist.

5. Verfahren nach Anspruch 1, wobei die Organosiliciumverbindung (C) eine Organosiliciumverbindung aus 3 bis 50 Siliciumatomen ist, enthaltend mindestens drei SiH-Gruppen und mindestens ein di- bis vierwertiges Phenylengerüst in einem Molekül.

6. Verfahren nach irgendeinem der Ansprüche 1 bis 5, wobei die Organosiliciumverbindung (E) aus der Gruppe gewählt ist, bestehend aus 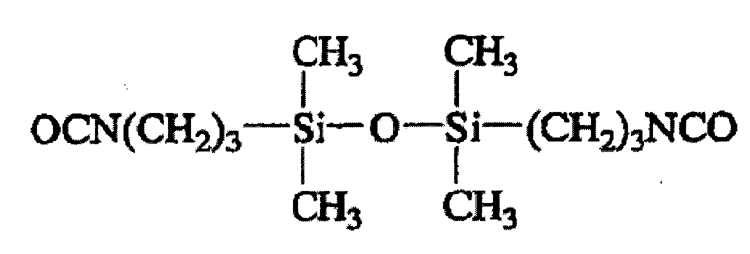
(CH₃O)₃-Si-(CH₂)₃NCO
und
(CH₃CH₂O)₃-Si-(CH₂)₃NCO.

7. Verfahren nach irgendeinem der Ansprüche 1 bis 6, wobei die Siliconkautschukzusammensetzung eine Viskosität im Bereich von 50 bis 800 Pa·s bei 25°C und eine Scherrate von 10 s⁻¹ besitzt und beim Spritzgießen verwendet wird.

8. Verfahren nach irgendeinem der Ansprüche 1 bis 7, wobei die Siliconkautschukzusammensetzung eine 10%-Härtezeit T10 von 10 Sekunden bis 60 Sekunden besitzt, gemessen bei 130°C während 3 Minuten, und beim Spritzgießen verwendet wird.

## Revendications

1. Procédé de production d'un article entièrement moulé qui comprend un substrat métallique et un caoutchouc de silicone durci d'une composition de caoutchouc de silicone auto-adhésive durcissable par addition formée sur le substrat, le procédé comprenant les étapes consistant à :
appliquer la composition de caoutchouc de silicone sur le substrat métallique, et
durcir la composition de caoutchouc de silicone, la composition de caoutchouc de silicone comprenant
(A) 100 parties en poids d'un organopolysiloxane contenant au moins deux groupes alcényle liés à un atome de silicium dans une molécule,
(B) de 0,1 à 30 parties en poids d'un organohydrogénopolysiloxane contenant au moins deux atomes d'hydrogène liés à un atome de silicium dans une molécule, mais exempt de cycle aromatique lié à un atome de silicium,
(C) de 0,1 à 30 parties en poids d'un composé d'organosilicium contenant au moins un groupe SiH et au moins un cycle aromatique mono- à tétravalent dans une molécule,
(D) de 0 à 100 parties en poids d'une poudre fine de silice de renforcement,
(E) de 0,1 à 25 parties en poids d'un composé d'organosilicium ayant un groupe isocyanate qui est sélectionné dans le groupe constitué par un composé d'organosilane ayant au moins un groupe isocyanate et un groupe alcoxysilyle et/ou silanol dans une molécule et un organodisiloxane ayant deux groupes isocyanate dans une molécule, et
(F) une quantité catalytique d'un catalyseur de réaction d'addition.

2. Procédé selon la revendication 1, dans lequel le substrat métallique est sélectionné dans le groupe constitué par l'aluminium, le fer, le cuivre, le zinc, le nickel, l'acier inoxydable et le laiton.

3. Procédé selon la revendication 1 ou 2, dans lequel la composition de caoutchouc de silicone est durcie à une température de 60 à 220 °C pendant 5 secondes à 30 minutes.

4. Procédé selon la revendication 1, dans lequel le composé d'organosilicium (C) est un organopolysiloxane contenant au moins trois atomes d'hydrogène liés à un atome de silicium dans une molécule dans laquelle au moins 2 % en moles du total des atomes d'hydrogène liés à un atome de silicium et des groupes organiques liés à un atome de silicium sont des groupes phényle, ledit organopolysiloxane ayant un degré de polymérisation de 15 à 100.

5. Procédé selon la revendication 1, dans lequel le composé d'organosilicium (C) est un composé d'organosilicium de 3 à 50 atomes de silicium contenant au moins trois groupes SiH et au moins un squelette de phénylène di- à tétravalent dans une molécule.

6. Procédé selon l'une quelconque des revendications 1 à 5, dans lequel le composé d'organosilicium (E) est sélectionné dans le groupe constitué par 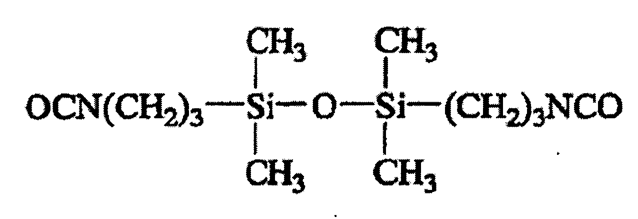
(CH₃O)₃-Si-(CH₂)₃NCO
et
(CH₃CH₂O)₃-Si-(CH₂)₃NCO.

7. Procédé selon l'une quelconque des revendications 1 à 6, dans lequel la composition de caoutchouc de silicone a une viscosité comprise dans la plage allant de 50 à 800 Pa.s à 25 °C et une vitesse de cisaillement de 10 s⁻¹ et est utilisé dans un moulage par injection.

8. Procédé selon l'une quelconque des revendications 1 à 7, dans lequel la composition de caoutchouc de silicone a un temps de durcissement de 10 % T10 de 10 secondes à 60 secondes lorsqu'il est mesuré à 130 °C pendant 3 minutes et est utilisé dans un moulage par injection.
